# EUROPÄISCHE PATENTSCHRIFT

(11) **EP 1 861 678 B1**
(45) Veröffentlichungstag und Bekanntmachung des Hinweises auf die Patenterteilung: **28.01.2009**
(21) Anmeldenummer: 06705404.9
(22) Anmeldetag: 20.03.2006
(51) Int. Cl.: G01B 7/16, G01L 9/00

(54) **ELEKTRISCHES MESSEN VON DEHNUNGEN AN ZYLINDRISCHEN KÖRPERN**
ELECTRICALLY MEASURING EXPANSIONS ON CYLINDRICAL BODIES
MESURE ELECTRIQUE DE DILATATIONS SUR DES CORPS CYLINDRIQUES

(30) Priorität: 24.03.2005 CH 510052005
(43) Veröffentlichungstag der Anmeldung: 05.12.2007
(73) Patentinhaber: Baumer Holding AG, 8500 Frauenfeld (CH)
(72) Erfinder: SCHMID, Jean-Jacques, CP15005 Solymar (UY)
(74) Vertreter: Roshardt, Werner Alfred
(86) Internationale Anmeldenummer: PCT/CH2006/000164
(87) Internationale Veröffentlichungsnummer: WO 2006/099767

(56) Entgegenhaltungen:
- EP-A- 0 357 966
- WO-A-01/84073
- US-A- 5 563 349

## Beschreibung

Die Erfindung bezieht sich auf eine Vorrichtung und ein Verfahren zum elektrischen Messen positiver und negativer Dehnungen an der Mantelfläche von im wesentlichen zylindrischen Körpern mit einer mobilen Messzange, welche ein Führungsprofil für zwei gegeneinander einstellbare Schieber mit Zentrierelementen zum Einspannen eines im wesentliche zylindrischen Körpers in radialer Richtung und Anpressen von wenigstens einem dehnungsempfindlichen Messelement auf die Mantelfläche des zylindrischen Körpers unter Bildung eines Kraftschlusses aufweist.

Es ist bekannt, positive und negative Dehnungen an zylindrischen Körpern zu messen, indem ein hoher Anpressdruck auf ein Messelement ausgeübt wird. In der CH 687648 A5 wird ein Messwertaufnehmer beschrieben, bei welchem ein elastisches Element mit Hilfe von zwei Kreisringhälften so auf die äussere Oberfläche des zylindrischen Körpers gepresst wird, dass die an dessen Mantelfläche auftretenden Dehnungen dank eines Kraftschlusses gemessen werden können. Weiter muss das Messobjekt am Messort im Schnitt exakt rund sein, für ovale oder eckige Profile sind diese Aufnehmer nicht vorgesehen.

In der WO 01/84073 A1 ist ein weiterentwickelter Messwertaufnehmer beschrieben, welcher mehr als zweiteilig und im wesentlichen ringförmig ausgebildet ist. Zwei Segmente des Messwertaufnehmers haben je eine einander in Spannrichtung diagonal gegenüberliegende Aussparung für ein überstehendes elastisches Teil mit einem Messelement. Die Messelemente sind zur Dehnungsmessung kraftschlüssig auf die Oberfläche des Körpers pressbar. Die einander diagonal gegenüberliegenden Segmente mit den Messelementen sind beidends mit auswechselbaren und/oder einstellbaren seitlichen Führungsorganen für den zu messenden Körper verspannbar. Die gleichen zwei Segmente mit einem Messelement können für unterschiedliche Durchmesser und Querschnittsformen eines Körpers eingesetzt werden

Die EP 0 357 966 A der Liberty Technologies, Inc. beschreibt eine Messzange mit zwei Schiebern, bei welcher einer der Schieber feststeht und ein weiterer der Schieber auf einer Spindel sitzt und mittels dieser Spindel in Spannrichtung verschiebbar ist.

Aus dem Datenblatt "Messzange DSRZ" der Firma Baumer sensopress AG, CH-8501 Frauenfeld, ist ein variables Messgerät für Dehnungsmessungen, insbesondere auf Holmen und Zylindern von Pressen, bekannt. Dieses Gerät erlaubt eine stufenfreie Durchmessereinstellung und kann ohne Oberflächenbehandlung montiert werden. Es ist in erster Linie für zyklische Applikationen, z. B. für Zug- und Druck-Messungen und Schliesskraftmessungen an Kunststoff-Spritzgiessmaschinen, verwendbar. Die Messzange weist eine mittig angeordnete, höhenverstellbare Auflagefläche für den zylindrischen Körper auf, damit die Messungen exakt im Bereich eines Durchmessers erfolgen können. Dazu sind jedoch verhältnismässig komplizierte Manipulationen notwendig, es muss für jede Messung die optimale Position gesucht und eingestellt werden.

Der Erfindung liegt die Aufgabe zugrunde, eine Vorrichtung und ein Verfahren der eingangs genannten Art zu schaffen, welche das elektrische Messen positiver und negativer Dehnungen an der Mantelfläche von im wesentlichen zylindrischen Körpern mit einer mobilen Messzange vereinfachen und bezüglich der optimalen Position automatisieren.

Bezüglich der mobilen Messzange zur Durchführung des Verfahrens wird die Aufgabe erfindungsgemäss dadurch gelöst, dass die Schieber in ihrem Kopfbereich eine Führung für die Zentrierelemente aufweisen, in welcher die Zentrierelemente gegen den Widerstand wenigstens einer Rückholfeder in Spannrichtung verschiebbar geführt sind. Spezielle und weiterbildende Ausführungsformen der Messzange sind Gegenstand von abhängigen Patentansprüchen.

Auch bei Ausübung des für die Bildung eines Kraftschlusses notwendigen hohen Anpressdrucks bleibt die mobile Messzange stabil auf den zylindrischen Körper gesetzt, was für zuverlässige Messwerte wesentlich ist. Von besonderer Bedeutung ist erfindungsgemäss, dass die federnden winkelförmigen Zentrierelemente beim Ausüben des Anpressdrucks zur Herstellung des Kraftschlusses gegen eine bezüglich der Anpresskraft vernachlässigbare Federkraft zurückweichen, jedoch die winkelförmigen Zentrierelemente beim Lösen der Anpresskraft wieder in ihre Ruhelage zurückfedern, in welcher das Messelement einen vom Durchmesser des Körpers abhängigen Abstand hat. Mit dem Begriff Rückholfeder wird nicht nur eine Feder im klassischen Sinn, d.h. beispielsweise eine Spiral-, Blatt- oder Tellerfeder, umfasst, sondern auch wie Federn wirkende Äquivalente, z.B. ein elastisch komprimierbarer Block, ein elastisches Zugorgan, ein komprimierbares bzw. dehnbares Gasvolumen oder ineinander schiebbare Magnete. Wesentlich ist, wie erwähnt, dass der Widerstand der Rückholfeder/n im Vergleich zur Anpresskraft zur Herstellung des Kraftschlusses vernachlässigbar klein ist, und dass die Messzange handlich bleibt.

Vorzugsweise sind die winkelförmigen Zentrierelemente im engeren Sinn auswechselbar, beispielsweise werden für Durchmesserbereiche des Körpers von 40 bis 100 mm, 100 bis 160 mm und 160 bis 220 mm drei verschieden grosse, vorzugsweise im wesentlichen winkelförmige Zentrierelemente oder für Bereiche von 30 bis 55 mm, 55 bis 100 mm, 100 bis 170 mm und 170 bis 240 mm vier verschieden grosse Zentrierelemente eingesetzt.

Die Zentrierelemente haben für die Aufnahme eines im wesentlichen zylinderförmigen Körpers vorzugsweise einen Winkel von 60° bis 120°, insbesondere von 80° bis 100°. In der Praxis haben sich Winkel von etwa 90° als besonders geeignet erwiesen.

Das Führungsprofil der Messzange ist bezüglich des Querschnitts vorzugsweise kreisrund mit einer Abflachung, rechteckig, quadratisch, dreieckig, hexagonal oder trapezförmig ausgebildet und zum Einschieben und Sichern der Schieber geeignet. Das Führungsprofil ist mit Blick auf die notwendige Stabilität verhältnismässig dickwandig ausgebildet. Zur groben Zustellung des zweiten Schiebers weist das Führungsprofil zweckmässig einen Raster auf, beispielsweise in Form einer Zahnstange oder einer Lochung, zum Verrasten des erwähnten zweiten Schiebers zur groben Zustellung. Der erste Schieber ist mit einer Spindel entlang des Führungsprofils verschiebbar. Der Antrieb der Spindel weist zweckdienlich einen integrierten und einstellbaren Drehmechanismus zur Begrenzung des übertragenen Drehmoments auf.

In allen Ausführungsformen weist die erfindungsgemässe Messzange gegenüber einem Messring den Vorteil auf, dass sie nicht einem einzigen im wesentlichen zylinderförmigen Körper zugeordnet ist, sondern mit wenigen Handgriffen und ohne Lösen von Schrauben oder dgl. von einem Körper zum andern wechseln kann. Die Zentrierung erfolgt im Gegensatz zu bekannten Messzangen automatisch und zwangläufig am richtigen Ort.

Bezüglich des Verfahrens wird die Aufgabe erfindungsgemäss dadurch gelöst, dass ein auf einem Führungsprofil mittels einer Spindel in Spannrichtung verschiebbarer erster Schieber mit einem Zentrierelement auf den zylindrischen Körper aufgesetzt, ein auf dem Führungsprofil verschiebbarer zweiter Schieber mit einem Zentrierelement an den zylindrischen Körper angestellt und verrastet wird, durch Anziehen der Spindel die Zentrierelemente zwischen den Schiebern auf den Körper gespannt, und zur Bildung des Kraftschlusses das/die Messelement/e auf die Mantelfläche des Körpers gepresst wird/werden. Spezielle und weiterbildende Ausführungsformen des Verfahrens sind Gegenstand von abhängigen Patentansprüchen.

Die Zentrierelemente der Schieber bewirken, dass der im wesentlichen zylindrisch ausgebildete Körper bezüglich der Messelemente der Messzange automatisch und zwangsläufig die optimale Position einnimmt. Sobald die Zentrierelemente auf dem Körper aufliegen, verschieben sie sich federnd gegenüber den Messelementen, bis diese kraftschlüssig angedrückt sind. Beim' Entlasten federn die Zentrierelemente in ihre Ruhestellung zurück.

Die Zentrierelemente halten ihre Führungsfunktion bis zur Herstellung eines Kraftschlusses zwischen dem Messelement und der Mantelfläche des Körpers aufrecht und nehmen diese bei dessen Lösen sofort wieder auf.

Auf die Spindel, welche den Kraftschluss durch Verschieben des ersten Schiebers erzeugt, wird bevorzugt ein vorausbestimmtes Drehmoment ausgeübt. Für einen Kraftschluss muss der Anpressdruck so gross sein, dass sämtliche Dehnungen der mantelförmigen Körperoberfläche auf das dehnungsempfindliche Messelement, zweckmässig ein Dehnungsmessstreifen (DMS), in allen Richtungen exakt 1:1 übertragen werden. Es macht jedoch keinen Sinn, die dehnungsempfindlichen Messelemente mit einem höheren als dem notwendigen Druck auf die Mantelfläche des Körpers zu pressen. Dazu wird ein auf die Spindel einwirkendes maximales Drehmoment bestimmt und mittels eines Drehmomentschlüssels oder eines integrierten Drehmomentmechanismus' übermittelt. Ein maximales auf die Spindel ausgeübtes Drehmoment von vorzugsweise 2 bis 5 Nm, insbesondere etwa 3 Nm, hat sich in der Regel als optimal erwiesen.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 1 eine Ansicht einer mobilen Messzange zur elektrischen Dehnungsmessung, mit aufgeschnittenem zylindrischem Körper,
- Fig. 2 eine Draufsicht auf die Messzange gemäss Fig. 1, ohne zylindrischen Körper,
- Fig. 3 eine Seitenansicht einer Messzange gemäss Fig. 1, mit zylindrischem Körper, und
- Fig. 4 einen Schnitt durch eine Messzelle mit Dehnungsmessstreifen DMS.

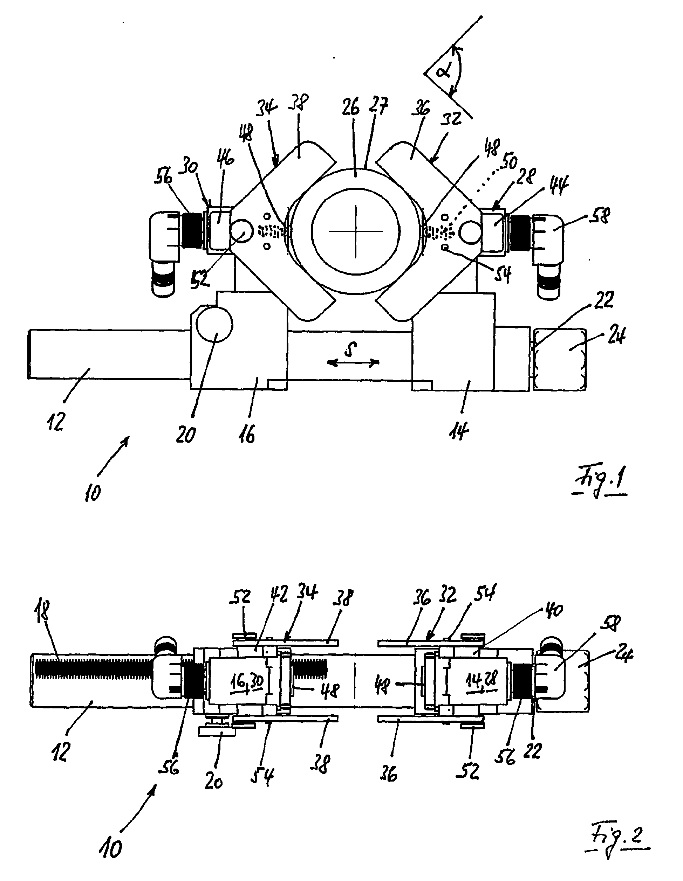

Eine mobile Messzange 10 gemäss Fig. 1 bis 3 weist ein Führungsprofil 12 mit vorliegend kreisrundem, nach oben abgeflachtem Querschnitt auf. Auf dem Führungsprofil 12 sind ein erster Schieber 14 und ein zweiter Schieber 16 verdrehgesichert aufgebracht. Im Bereich des zweiten Schiebers 16 ist über einen Teil des Umfangs des Führungsprofils 12 eine Zahnung 18 ausgebildet (Fig. 2), mit einem Kammabstand von etwa 2 mm. Mit einem Betätigungsknopf 20 wird der zweite Schieber 16 aus der Zahnung 18 ausgerastet und kann entlang des Führungsprofils 12 frei verschoben werden. Beim Loslassen des Betätigungsknopfs 20 rastet eine nicht sichtbare Einrastnase des zweiten Schiebers 16 in der Zahnung 18 ein, wodurch der zweite Schieber 16 grob positioniert ist.

Der erste Schieber 14 ist in Spannrichtung S von einer in Axialrichtung fixierten Spindel 22 mit geringer Gewindesteigung durchgriffen, welche in ein Innengewinde eingreift. Eine Drehmomenteinstellung 24 definiert die maximale Anpresskraft auf einen zylindrischen Körper 26, vorliegend ein rohrförmiger Holm einer Kunststoff-Spritzgiessmaschine. Die Drehmomenteinstellung könnte auch auf einen normalen Schraubenkopf erfolgen, indem ein Drehmomentschlüssel verwendet wird.

Die Schieber 14, 16 haben einen quaderförmigen Schieberkopf 28, 30, auf welchem je ein in der Spannrichtung S angeordnetes Zentrierelement 32, 34 verschiebbar geführt ist.

In Fig. 2 ist die Gestaltung des Zentrierelements 32, 34 besser erkennbar. Jeweils paarweise sind zwei im wesentlichen rechtwinklige Zentrierplatten 36, 38 aussenseitig auf einen Schlitten 40, 42 montiert, welcher in aussenseitigen Aussparungen 44, 46 der beiden Schieberköpfe 28, 30 geführt ist. Der zylindrische Körper 26 gemäss Fig. 1 liegt auf den Schrägseiten der abgewinkelten Zentrierplatten 36, 38 auf, diese sind bereits etwas auseinander gestossen, der zylindrische Körper 26 liegt auch auf den vorliegend beidseits angebrachten Messelementen 48 auf.

Hinter allen Zentrierplatten 36, 38 ist im Schlitten eine nicht sichtbare, deshalb in Fig. 1 punktiert angedeutete, Rückholfeder 50 angeordnet. Diese wird gespannt, wenn die auf den zylindrischen Körper 26 aufliegenden Zentrierelemente 32, 34 mit den rechtwinkligen Zentrierplatten 36, 38 durch die Schieber 14, 16 gespreizt werden. Verglichen mit der Anpresskraft ist die Federkraft der Rückholfedern 50 vernachlässigbar, sie genügt jedoch, um beim Entlasten der Spannkraft die winkelförmigen Zentrierelemente 32, 34 in die Ruheposition zurückzuholen.

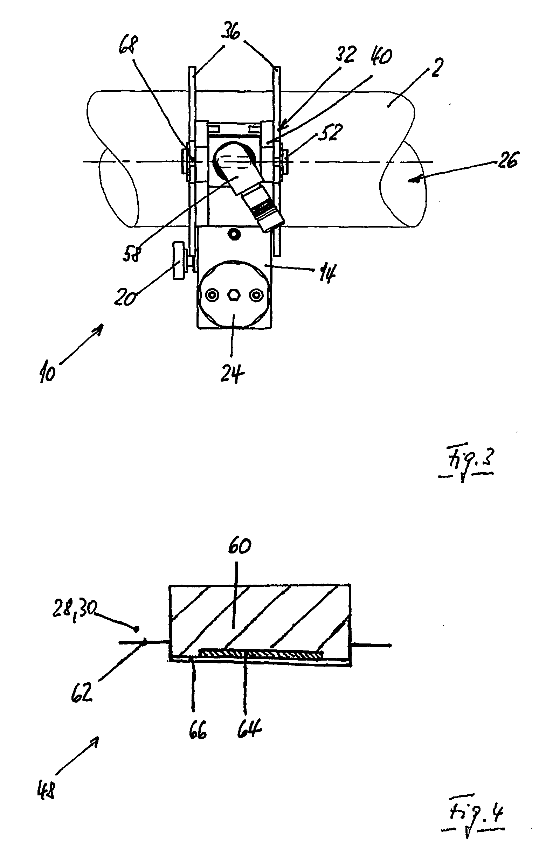

Die rechtwinkligen Zentrierplatten 36, 38 sind auswechselbar an den betreffenden Schlitten 40, 42 befestigt, sie können für andere Durchmesserbereiche des zylindrischen Körpers 26 ausgewechselt werden. Die rechtwinkligen Zentrierplatten 36, 38 weisen am Aussenscheitel einen Schlitz 68 auf, welcher in Fig. 1 von einem Schraubenkopf 52 verdeckt, jedoch in Fig. 3 erkennbar ist. Bei der Montage wird der Schraubenschaft in den erwähnten Schlitz 68 eingeführt und die Zentrierplatte 36, 38 beim Abklappen in die Normallage mit zwei Löchern über entsprechende Bolzen 54 geführt. Nach dem Anziehen der Schraubenköpfe 52 sind die rechtwinkligen Zentrierplatten 36, 38 montiert. Diese haben lediglich eine Führungsfunktion und müssen keine Anpresskräfte aufnehmen.

Die Schieberköpfe 28, 30 sind zugleich Messköpfe, auch mit integrierter Auswerteelektronik. Jeder Messkopf weist eine Schraub- oder Steckbuchse 56 für einen Anschlussstecker 58 auf.

In der Ausführungsform gemäss Fig. 3 ist ein zylindrischer Körper 26 als Vollzylinder ausgebildet.

In Fig. 4 ist ein dehnungsempfindliches Messelement 48 mit einem bezüglich der Innenkontur 62 eines Messkopfs 28, 30 überstehenden elastischen Element 60. Auf der Aussenseite des elastischen Elements 60 ist ein DMS-Streifen 64 gelegt, welcher mit einer Metallfolie 66 aus Stahl geschützt ist. Der DMS-Streifen 64 kann bezüglich der Spannrichtung S z. B. axial, radial oder mit 45° angeordnet sein.

Die an der Mantelfläche 27 des zylindrischen Körpers 26 anliegende Unterseite des elastischen Elements 60 und die Messzelle 48 sind flach oder dem Radius des Körpers 26 grob angepasst.

## Patentansprüche

1. Mobile Messzange (10), welche ein Führungsprofil (12) für zwei gegeneinander einstellbare Schieber (14, 16) mit Zentrierelementen (32, 34) zum Einspannen eines im wesentlichen zylinderischen Körpers (26) in radialer Richtung und Anpressen von wenigstens einem dehnungsempfindlichen Messelement (48) auf die Mantelfläche (27) des zylindrischen Körpers (26) unter Bildung eines Kraftschlusses aufweist,
**dadurch gekennzeichnet, dass**
die Schieber (14, 16) in ihrem Kopfbereich (28, 30) eine Führung (44, 46) für die Zentrierelemente (32, 34) aufweisen, in welcher die Zentrierelemente (32, 34) gegen den Widerstand wenigstens einer Rückholfeder (50) in Spannrichtung (S) verschiebbar geführt sind.

2. Mobile Messzange nach Anspruch 1, **dadurch gekennzeichnet, dass** die Zentrierelemente (32, 34) im Wesentlichen winkelförmige Zentrierplatten (36, 38) haben, welche vorzugsweise auswechselbar sind.

3. Mobile Messzange nach Anspruch 1 oder 2, **dadurch gekennzeichnet, dass** die Zentrierelemente (32, 34) insbesondere die Zentrierplatten (36, 38), einen Winkel von 60° bis 120°, vorzugsweise 80° bis 100°, haben.

4. Mobile Messzange (10) nach einem der Ansprüche 1 bis 3, **dadurch gekennzeichnet, dass** die Zentrierelemente (32, 34) aus zwei seitlich auf einem Schlitten (40, 42) lösbar befestigten winkelförmigen Zentrierplatten (36, 38) bestehen, welche auf beiden Aussenseiten des Schieberkopfes (28, 30) in Aussparungen (44, 46) geführt sind und zwei Rückholfedern (50) aufweisen.

5. Mobile Messzange nach einem der Ansprüche 1 bis 4, **dadurch gekennzeichnet, dass** der erste Schieber (14) mittels einer Spindel (22) in Spannrichtung verschiebbar ist.

6. Mobile Messzange nach einem der Ansprüche 1 bis 5, **dadurch gekennzeichnet, dass** das Führungsprofil (12) zur groben Positionierung des zweiten Schiebers (16) einen Raster zum Verrasten des zweiten Schiebers (16) aufweist, vorzugsweise in Form einer Zahnung (18) oder einer Lochung, in welche eine Einrastnase des zweiten Schiebers (16) einrastet.

7. Mobile Messzange nach Anspruch 6, **dadurch gekennzeichnet, dass** die Zahnung etwa 2 mm Zahnabstand aufweist.

8. Mobile Messzange nach Anspruch 6 oder 7, **dadurch gekennzeichnet, dass** der zweiter Schieber (16) einen Betätigungsknopf aufweist, mit dem er aus dem Raster (18) ausgerastet und entlang des Führungsprofils (12) frei verschoben werden kann.

9. Mobile Messzange nach einem der Ansprüche 1 bis 8, **dadurch gekennzeichnet, dass** die Spindel (22) einen Antrieb mit einer integrierten Drehmomenteinstellung (24) aufweist.

10. Mobile Messzange nach einem der Ansprüche 1 bis 9, **dadurch gekennzeichnet, dass** auf der dem Messelement (48) gegenüberliegenden Stirnseite des Schieberkopfs (28, 30) ein Messkopf integriert ist.

11. Verfahren zum elektrischen Messen positiver und negativer Dehnungen an der Mantelfläche (27) eines im wesentlichen zylindrischen Körpers (26) mit einer mobilen Messzange nach einem der Ansprüche 6 bis 10, wobei der erste Schieber (14) mit einem Zentrierelement (32) auf den zylindrischen Körper (26) aufgesetzt, der zweite Schieber (16) mit dem Zentrierelement (34) an den zylindrischen Körper (26) angestellt und verrastet wird und durch Anziehen der Spindel (22) die Zentrierelemente (32, 34) zwischen den Schiebern (14, 16) auf den zylindrischen Körper (26) gespannt werden.

12. Verfahren nach Anspruch 11, bei dem ein auf die Spindel (22) einwirkendes maximales Drehmoment bestimmt und eingestellt wird.

13. Verfahren nach Anspruch 11 oder 12, wobei ein maximal auf die Spindel (22) einwirkendes Drehmoment von 2 bis 5 Nm, insbesondere etwa 3 Nm, eingestellt wird.

## Claims

1. Mobile clip-on instrument (10) which has a guide profile (12) for two slides (14, 16) which can be adjusted with respect to one another and have centring elements (32, 34) for clamping in an essentially cylindrical body (26) in the radial direction and for pressing at least one strain-sensitive measurement element (48) onto the outer surface (27) of the cylindrical body (26) forming a force fit,
**characterized in that**
the slides (14, 16) have, in their head area (28, 30) a guide (44, 46) for the centring elements (32, 34), in which guide (44, 46) the centring elements (32, 34) are guided such that they can be moved in the clamping direction (S) against the resistance of at least one return spring (50).

2. Mobile clip-on instrument according to Claim 1, **characterized in that** the centring elements (32, 34) have essentially angled centring plates (36, 38) which are preferably exchangeable.

3. Mobile clip-on instrument according to Claim 1 or 2, **characterized in that** the centring elements (32, 34), in particular the centring plates (36, 38), have an angle of 60° to 120°, preferably 80° to 100°.

4. Mobile clip-on instrument (10) according to one of Claims 1 to 3, **characterized in that** the centring elements (32, 34) comprise two angled centring plates (36, 38) which are detachably mounted at the side on a carriage (40, 42), are guided in cutouts (44, 46) on both outer faces of the slide head (28, 30) and have two return springs (50).

5. Mobile clip-on instrument according to one of Claims 1 to 4, **characterized in that** the first slide (14) can be moved in the clamping direction by means of a spindle (22).

6. Mobile clip-on instrument according to one of Claims 1 to 5, **characterized in that** the guide profile (12) has a grid for latching the second slide (16) for rough positioning of the second slide (16), preferably in the form of a tooth system (18) or perforation, into which a latching tab on the second slide (16) latches.

7. Mobile clip-on instrument according to Claim 6, **characterized in that** the tooth system has a tooth separation of about 2 mm.

8. Mobile clip-on instrument according to Claim 6 or 7, **characterized in that** the second slide (16) has an operating knob by means of which it can be unlatched from the grid (18) and can be moved freely along the guide profile (12).

9. Mobile clip-on instrument according to one of Claims 1 to 8, **characterized in that** the spindle (22) has a drive with integrated torque adjustment (24).

10. Mobile clip-on instrument according to one of Claims 1 to 9, **characterized in that** a measurement head is integrated on the end face of the slide head (28, 30) opposite the measurement element (48).

11. Method for electrical measurement of positive and negative strains on the outer surface (27) of an essentially cylindrical body (26) using a mobile clip-on instrument according to one of Claims 6 to 10, wherein the first slide (14) is fitted with a centring element (32) onto the cylindrical body (26), the second slide (16) is fitted with the centring element (34) onto the cylindrical body (26) and is latched, and the centring elements (32, 34) are clamped between the slides (14, 16) on the cylindrical body (26) by tightening the spindle (22).

12. Method according to Claim 11, in which a maximum torque acting on the spindle (22) is determined and set.

13. Method according to Claim 11 or 12, in which a maximum torque acting on the spindle (22) of 2 to 5 Nm, in particular of about 3 Nm is set.

## Revendications

1. Pince de mesure mobile (10), qui présente un profilé de guidage (12) pour deux coulisseaux (14, 16) ajustables l'un par rapport à l'autre avec des éléments de centrage (32, 34) pour serrer un corps essentiellement cylindrique (26) dans la direction radiale et presser au moins un élément de mesure (48) sensible à la dilatation sur la surface d'enveloppe (27) du corps cylindrique (26) en formant un engagement par force,
**caractérisée en ce que**
les coulisseaux (14, 16) présentent, dans leur région de tête (28, 30), un guide (44, 46) pour les éléments de centrage (32, 34), dans lequel les éléments de centrage (32, 34) sont guidés de manière déplaçable dans la direction de serrage (S) à l'encontre de la résistance d'au moins un ressort de rappel (50).

2. Pince de mesure mobile selon la revendication 1, **caractérisée en ce que** les éléments de centrage (32, 34) ont essentiellement des plaques de centrage coudées (36, 38) qui peuvent de préférence être remplacées.

3. Pince de mesure selon la revendication 1 ou 2, **caractérisée en ce que** les éléments de centrage (32, 34), en particulier les plaques de centrage (36, 38), forment un angle de 60 à 120°, de préférence de 80 à 100°.

4. Pince de mesure mobile (10) selon l'une quelconque des revendications 1 à 3, **caractérisée en ce que** les éléments de centrage (32, 34) se composent de deux plaques de centrage (36, 38) coudées fixées de manière détachable latéralement sur un chariot (40, 42), qui sont guidées sur les deux côtés extérieurs de la tête de coulisseau (28, 30) dans des évidements (44, 46) et qui présentent deux ressorts de rappel (50).

5. Pince de mesure mobile selon l'une quelconque des revendications 1 à 4, **caractérisée en ce que** le premier coulisseau (14) peut être déplacé dans la direction de serrage au moyen d'une broche (22).

6. Pince de mesure mobile selon l'une quelconque des revendications 1 à 5, **caractérisée en ce que** le profilé de guidage (12) présente, pour un positionnement grossier du deuxième coulisseau (16), une grille d'encliquetage du deuxième coulisseau (16), de préférence en forme de denture (18) ou de perforation, dans laquelle un ergot d'encliquetage du deuxième coulisseau (16) vient s'encliqueter.

7. Pince de mesure mobile selon la revendication 6, **caractérisée en ce que** la denture présente un espacement entre les dents d'environ 2 mm.

8. Pince de mesure mobile selon l'une quelconque des revendications 6 ou 7, **caractérisée en ce que** le deuxième coulisseau (16) présente un bouton d'actionnement avec lequel il peut être désencliqueté de la grille (18) et déplacé librement le long du profilé de guidage (12).

9. Pince de mesure mobile selon l'une quelconque des revendications 1 à 8, **caractérisée en ce que** la broche (22) présente un entraînement avec un ajustement de couple intégré (24).

10. Pince de mesure mobile selon l'une quelconque des revendications 1 à 9, **caractérisée en ce qu'**une tête de mesure est intégrée du côté frontal de la tête de coulisseau (28, 30) opposé à l'élément de mesure (48).

11. Procédé de mesure électrique de dilatation positives et négatives au niveau de la surface d'enveloppe (27) d'un corps (26) essentiellement cylindrique avec une pince de mesure mobile selon l'une quelconque des revendications 6 à 10, dans lequel le premier coulisseau (14) est posé avec un élément de centrage (32) sur le corps cylindrique (26), le deuxième coulisseau (16) est placé avec l'élément de centrage (34) contre le corps cylindrique (26) et est encliqueté, et par serrage de la broche (22), les éléments de centrage (32, 34) sont serrés entre les coulisseaux (14, 16) sur le corps cylindrique (26).

12. Procédé selon la revendication 11, dans lequel un couple maximum agissant sur la broche (22) est défini et ajusté.

13. Procédé selon la revendication 11 ou 12, dans lequel on ajuste un couple de 2 à 5 Nm, en particulier de 3 Nm, agissant au maximum sur la broche (22).
